# EUROPEAN PATENT SPECIFICATION

(11) **EP 1 174 257 B1**
(45) Date of publication and mention of the grant of the patent: **01.10.2003**
(21) Application number: 01116713.7
(22) Date of filing: 17.07.2001
(51) Int. Cl.: B32B 5/26, B32B 27/12, E04B 1/70

(54) **Laminated sheet for house wrap material and roof underlay sheet**
Laminiertes Bahnenmaterial für Aussenwände und als Dachunterspannbahn
Feuille stratifiée isolante pour murs extérieurs de bâtiments et comme matériau sous-toiture

(30) Priority: 19.07.2000 JP 2000218763
(43) Date of publication of application: 23.01.2002
(73) Proprietor: Kuraray Co., Ltd., Okayama 710-8622 (JP); Chori Co., Ltd., Osaka-shi, Osaka 541 (JP)
(72) Inventor: Araida, Yasurou, Osaka-shi, Osaka (JP); Hatta, Nobuo, Osaka-shi, Osaka (JP); Tadokoro, Masami, Chuo-ku, Osaka-shi, Osaka (JP)
(74) Representative: VOSSIUS & PARTNER

(56) References cited:
- EP-A- 0 570 215
- EP-A- 0 989 222
- WO-A-97/34037
- US-A- 5 045 133
- US-A- 5 308 691
- US-A- 5 939 341
- US-A- 5 952 252
- DATABASE WPI Section Ch, Week 199920 Derwent Publications Ltd., London, GB; Class A17, AN 1999-233442 XP002181845 -& JP 11 061625 A (KURARAY CO LTD), 5 March 1999 (1999-03-05)
- DATABASE WPI Section Ch, Week 199335 Derwent Publications Ltd., London, GB; Class A94, AN 1993-277834 XP002181846 & JP 05 193037 A (TORAY IND INC), 3 August 1993 (1993-08-03)
- DATABASE WPI Section Ch, Week 199208 Derwent Publications Ltd., London, GB; Class A17, AN 1992-059242 XP002181847 & JP 03 294559 A (KURARAY CO LTD), 25 December 1991 (1991-12-25)

## Description

The present invention relates to a laminated sheet for use in house wrap materials or roof underlay sheets, more particularly, to a laminated sheet comprising a laminate of specific nonwoven fabrics which is suitably used as house wrap materials or roof underlay sheets for the purpose of e.g. wind-breaking, water vapor transmission and waterproofing in exterior wall venting methods for building construction of e.g. houses.

In the recent methods of construction of houses a water vapor permeable, waterproof sheet material is installed between an exterior wall and a heat insulating material for the purpose of wind-breaking, water vapor transmission and waterproofing. Such a sheet material is called as "house wrap." The functions and properties required for the house wrap are (1) windbreak performance for preventing the cold outdoor air from reaching the heat insulating material, (2) water vapor permeability for escaping the indoor moisture to the outdoors, (3) waterproof performance for preventing waterdrops from penetrating into the heat insulating material, and (4) easy installation.

In the recent roofing work, for the same purposes as above, a roofing material such as tile and slate is underlaid with a roof underlay sheet. Like the house wrap material, the roof underlay sheet is required to have the above functions and properties 1 to 4.

Conventionally, an asphalt-impregnated felt has been widely used as the house wrap material and the roof underlay sheet. However, although acceptable with respect to the waterproof performance, the asphalt-impregnated felt is poor in the water vapor permeability, thereby making it difficult to escape the indoor moisture to the outdoors.

JP-A- 63-223249 proposes a house wrap material made of a composite material comprising a water vapor permeable, waterproof film and a polyolefin tape fabric. However, such a composite house wrap is difficult to balance the water vapor permeability and the waterproof performance, i.e., an increase in the water vapor permeability results in an insufficient waterproof performance and vice versa. In addition, the production thereof is rather difficult.

JP-A- 5-193037 proposes a water vapor permeable, waterproof sheet made of a laminate of a melt-blown nonwoven fabric and a spun-bonded nonwoven fabric. However, the proposed water vapor permeable, waterproof sheet fails to show a windbreak performance (air permeability) as high as required for the house wrap material and the roof underlay sheet.

The conventional water vapor permeable, waterproof sheet described above has been produced by an embossing method or a calendering method.

In the embossing method, the edge breaking due to the projections of an embossing machine is likely to occur in nonwoven fabrics, thereby failing to produce an intended water vapor permeable, waterproof sheet efficiently. If the embossing is conducted under mild conditions, a melt-blown nonwoven fabric and a spun-bonded nonwoven fabric are loosely bonded to reduce the peel strength. Such a loosely bonded sheet cannot be used as the house wrap material or roof underlay sheet, because these require a high mechanical strength.

Although the calendering method is free from the edge breaking, a high calendering force is needed to bond a melt-blown nonwoven fabric and a spun-bonded nonwoven fabric throughout their entire surfaces, this requiring a calendering machine with specific design. Although a melt-blown nonwoven fabric and a spun-bonded nonwoven fabric can be bonded at relatively low pressure by raising the calendering temperature, the porous structure of the nonwoven fabrics is lost and the bonded product tends to become flat, thereby failing to produce a sheet well-balanced in the water vapor permeability and the waterproof performance. Although a melt-blown nonwoven fabric and a spun-bonded nonwoven fabric can be bonded easily to some extent by using a hot-melt adhesive, this increases the basis weight (mass) of the resultant water vapor permeable, waterproof sheet and makes it difficult to well balance the water vapor permeability and the waterproof performance.

US-A-5308691 relates to calendered laminates of spunbonded and melt-blown polypropylene, webs which are suitable for use as a housewrap.

An object of the present invention is to provide a sheet material, particularly, a wind breaking, water vapor permeable, waterproof sheet material suitable as house wrap material and roof underlay sheet, which are free from the above problems in the prior art, and excellent and well-balanced in the wind breaking performance, the water vapor permeability and the waterproof performance.

Another object is to provide a sheet material excellent in mechanical strength and lightweight properties, and also easy to install, easy to handle and highly durable when applied to the house wrap material and the roof underlay sheet.

These objects could be achieved on the basis of the finding that a laminate sheet produced by face-bonding a specific nonwoven fabric made of polyolefin-based fibers and a spun-bonded nonwoven fabric made of thermoplastic polymer fibers via a specific heat-bonding nonwoven fabric made of thermoplastic elastomer ultra-fine fibers is excellent and well balanced in the wind breaking performance, the water vapor permeability and the waterproof performance.

Such a laminated sheet simultaneously possesses an air permeability of 10 sec/100 cm³ or more, a water vapor permeability of 4500 g/m²• day and a hydrostatic strength of 1050 mmH₂O or more, thereby being suitable as house wrap material and roof underlay sheet.

Thus, the present invention provides a laminated sheet for house wrap material or roof underlay sheet, comprising (A) a nonwoven fabric having a basis weight of 30 g/m² or less made of polyolefin-based ultra-fine fibers of 5 µm or less in average fiber diameter; (B) a heat-bonding nonwoven fabric having a basis weight of 15 g/m² or less made of thermoplastic elastomer ultra-fine fibers of 15 µm or less in average fiber diameter; and (C) a spun-bonded nonwoven fabric having a basis weight of 30 g/m² or more made of thermoplastic polymer fibers, the nonwoven fabric A and the spun-bonded nonwoven fabric C being face-bonded via the heat-bonding nonwoven fabric B.

The invention will be described below more in detail.

As described above, the laminated sheet for house wrap material or roof underlay sheet (hereinafter may be referred to simply as "the laminated sheet") has, on one of the outer surfaces, a nonwoven fabric A having a basis weight of 30 g/m² or less made of polyolefin-based ultra-fine fibers of 5 µm or less in average fiber diameter, and a spun-bonded nonwoven fabric C having a basis weight of 30 g/m² or more made of thermoplastic polymer fibers on the other outer surface. Interposed between the nonwoven fabric A and the nonwoven fabric C is a heat-bonding layer comprising a heat-bonding nonwoven fabric having a basis weight of 15 g/m² or less made of thermoplastic elastomer ultra-fine fibers of 15 µm or less in average fiber diameter. The nonwoven fabric A and the nonwoven fabric C are face-to-face heat-bonded to the nonwoven fabric B.

The term "average fiber diameter", referred to herein, of ultra-fine fibers constituting the nonwoven fabrics means the average of the diameters of 100 fibers measured on an enlarged image of scanning electron microscope (SEM).

The laminated sheet having the layered structure mentioned above is extremely excellent and well balanced in the wind breaking performance, the water vapor permeability and the waterproof performance, because it possesses an air permeability of 10 sec/100 cm³ or more, preferably 10 to 30 sec/100 cm³ a water vapor permeability of 4500 g/m² • day or more, preferably 5000 to 10000 g/m². day, and a hydrostatic strength of 1050 mmH₂O or more, preferably 1100 to 2000 mmH₂O.

Therefore, the laminated sheet of the present invention is highly suitable as the house wrap material and the roof underlay sheet which are required to be excellent and well balanced in the wind breaking performance, the water vapor permeability and the waterproof performance. Particularly, the laminated sheet of the present invention is suitably used as the house wrap material which is installed between an exterior wall and an inner heat insulating material for the purpose of wind-breaking, water vapor transmission and waterproofing in the construction such as houses and buildings, particularly wooden houses and prefabricated houses. In addition, the laminated sheet of the present invention is suitably used as the roof underlay sheet which is disposed under roofing materials such as tile an slate for the purpose of wind breaking, water vapor transmission and waterproofing.

In the present invention, the air permeability was measured according to JIS P 8117, the water vapor permeability was measured according to JIS Z 0208, and the hydrostatic strength was measured according to JIS L 1092-A.

The nonwoven fabric A is made of polyolefin-based ultra-fine fibers having an average fiber diameter of 5 µm or less so as to have a basis weight of 30 g/m² or less. If the average fiber diameter exceeds 5 µm, a laminated sheet excellent in the wind breaking performance, the water vapor permeability and the waterproof performance cannot be obtained. In view of attaining more enhanced wind breaking performance, water vapor permeability and waterproof performance, the average fiber diameter is preferably 3 µm or less, more preferably 1 to 3 µm. Although the wind breaking performance, the water vapor permeability and the waterproof performance of the laminated sheet are not adversely affected, a basis weight of the nonwoven fabric A exceeding 30 g/m² is disadvantageous in view of the lightweight properties, the handling ability, the easy installation, and the production costs. In consideration of such disadvantages, the basis weight of the nonwoven fabric A is preferably 25 g/m² or less, more preferably 15 to 25 g/m².

The nonwoven fabric A is preferably produced by, not limited thereto, melt-blowing an olefinic polymer. By the melt-blow method, the nonwoven fabric having a basis weight of 30 g/m² or less made of polyolefin-based ultra-fine fibers of 5 µm or less in average fiber diameter can be efficiently produced in good productivity.

The polyolefin-based fiber constituting the nonwoven fabric A may be any fiber as far as it is made of a fiber-forming olefinic polymer such as polypropylene, polyethylene, and a mixture of polypropylene and polyethylene. In view of the heat resistance and the fiber-forming properties, fibers made of polypropylene are preferable.

The heat-bonding nonwoven fabric B is a nonwoven fabric having a basis weight of 15 g/m² or less made of thermoplastic elastomer ultra-fine fibers of 15 µm or less in average fiber diameter. When the average fiber diameter exceeds 15 µm, the heat-bonding nonwoven fabric B becomes coarse and fails to face-to-face heat-bond the nonwoven fabric A and the spun-bonded nonwoven fabric C firmly, thereby making the interlaminar peeling being likely to occur. In view of increasing the heat-bonding ability and enhancing the wind breaking performance, water vapor permeability, and waterproof performance of the resultant laminated sheet, the average fiber diameter is preferably 10 µm or less, more preferably 2 to 10 µm.

Although the wind breaking performance, the water vapor permeability and the waterproof performance of the resultant laminated sheet are not adversely affected, a basis weight exceeding 15 g/m² is disadvantageous in view of the lightweight properties, the handling ability, the easy installation, and the production costs. In consideration of such disadvantages, the basis weight of the nonwoven fabric B is preferably 10 g/m² or less, more preferably 5 to 10 g/m².

The thermoplastic elastomer ultra-fine fiber may be any ultra-fine fiber as far as it is made of a fiber-forming thermoplastic elastomer which is melted at lower temperatures as compared with the fibers constituting the nonwoven fabric A and the nonwoven fabric C. Examples of such thermoplastic elastomer are a polystyrene-based thermoplastic elastomer, a polyolefin-based thermoplastic elastomer, a polyurethane-based thermoplastic elastomer, a polyester-based thermoplastic elastomer, a polyether-based thermoplastic elastomer, and a polyamide-based thermoplastic elastomer.

Preferably, the heat-bonding nonwoven fabric B is made of ultra-fine fibers of the polystyrene-based thermoplastic elastomer, a mixture of the polystyrene-based thermoplastic elastomer and an olefin resin, or the polyolefin-based thermoplastic elastomer. With the heat-bonding nonwoven fabric B made of such ultra-fine fibers, the heat-bonding strength between the heat-bonding nonwoven fabric B and the nonwoven fabric A, and between the heat-bonding nonwoven fabric B and the spun-bonded nonwoven fabric C can be enhanced, thereby providing a laminated sheet having a large peeling strength. More preferably, the heat-bonding nonwoven fabric B is made of ultra-fine fibers of the polystyrene-based thermoplastic elastomer, or a mixture of the polystyrene-based thermoplastic elastomer and the olefin resin.

The polystyrene-based thermoplastic elastomer as a preferred material for the heat-bonding nonwoven fabric B may be, for example, styrene-butadiene-styrene block copolymer (SBS), styrene-isoprene-styrene block copolymer (SIS), styrene-ethylene/butylene-styrene block copolymer (SEBS, hydrogenated SBS), and styrene-ethylene/propylene-styrene block copolymer (SEPS, hydrogenated SIS). To produce the ultra-fine fibers for constituting the heat-bonding nonwoven fabric B, these polystyrene-based thermoplastic elastomers may be used singly, in combination of two or more, or in the form of a mixture of at least one polystyrene-based thermoplastic elastomer and the olefin resin.

The mixture of the polystyrene-based thermoplastic elastomer and the olefin resin contains the polystyrene-based thermoplastic elastomer preferably in an amount of 50% by mass or more, more preferably 60% by mass or more, based on the total amount of the mixture in view of the heat-bonding strength. The olefin resin to be mixed with the polystyrene-based thermoplastic elastomer may be polypropylene, polyethylene, and ethylene-propylene copolymer. The olefin resins may be used singly or in combination of two or more.

The polyolefin-based thermoplastic elastomer as a preferred material for the heat-bonding nonwoven fabric B may be, for example, a physical mixture comprising an olefin resin such as polypropylene and polyethylene as the hard segment and an olefin rubber such as ethylene-propylene-diene copolymer (EPDM) as the soft segment. Also, a thermoplastic elastomer obtained by chemically bonding parts of the hard segment and the soft segment, or by mixing the hard segment and the soft segment under vulcanization.

The heat-bonding nonwoven fabric B is preferably produced by the melt-blow method, although not limited thereto, because a nonwoven fabric having a basis weight of 15 g/m² or less made of thermoplastic elastomer ultra-fine fibers of 15 µm or less in average fiber diameter can be efficiently produced in good productivity. Particularly, by melt-blowing the polystyrene-based thermoplastic elastomer, the mixture of the polystyrene-based thermoplastic elastomer and the olefin resin or the polyolefin-based thermoplastic elastomer, a close nonwoven fabric of fibers with small fiber diameters capable of firmly heat-bonding the nonwoven fabric A and the spun-bonded nonwoven fabric C can be obtained. Upon heat-pressing, for example, by calendering the nonwoven fabric A and the spun-bonded nonwoven fabric C with the heat-bonding nonwoven fabric B interposed therebetween, the heat-bonding nonwoven fabric B acts as a face-bonding material and becomes a film layer to combine the nonwoven fabric A and the spun-bonded nonwoven fabric C firmly, thereby improving the wind breaking performance, the water vapor permeability and the waterproof performance of the resultant laminated sheet.

The polystyrene-based thermoplastic elastomer and the mixture of the polystyrene-based thermoplastic elastomer and the olefin resin have a low softening point (melting point) and show the heat-bonding properties at low temperatures. Therefore, during the laminating process, the nonwoven fabric A and the spun-bonded nonwoven fabric C stacked on each surface of the heat-bonding nonwoven fabric B can been prevented from being softened or becoming excessively thin and flat by melting.

The polystyrene-based thermoplastic elastomer is adhesive and elastic. These properties sometimes make a nonwoven fabric made of ultra-fine fibers of the polystyrene-based thermoplastic elastomer, particularly, ultra-fine fibers of 100% polystyrene-based thermoplastic elastomer, difficult to handle. To avoid this problem during the laminate-forming process, the adhesive properties of the heat-bonding nonwoven fabric B may be decreased by a lubricant, or the polystyrene-based thermoplastic elastomer is directly melt-blown on one of the surfaces of the nonwoven fabric A or the spun-bonded nonwoven fabric C prior to the laminating process.

The olefin resin is well compatible with the polystyrene-based thermoplastic elastomer and reduces the adhesive properties and elasticity of the polystyrene-based thermoplastic elastomer. Therefore, the mixture of the polystyrene-based thermoplastic elastomer and the olefin resin improves the spinning properties, the processability and the handling properties during the production of the heat-bonding nonwoven fabric B by the melt-blow method, etc. The mixing ratio of the olefin resin can be determined in consideration of the handling, properties, etc., and preferably 50% by mass or less based on the total amount of the mixture, as described above.

The spun-bonded nonwoven fabric C is made of thermoplastic polymer fibers and has a basis weight of 30 g/m² or more.

Generally, the spun-bonded nonwoven fabric is produced by drawing the filaments melt-spun from a spinning nozzle by suction while simultaneously splitting the filaments uniformly by electrification to form a random web, and bonding the split filaments. Since being made of long filaments, the spun-bonded nonwoven fabric is excellent in the mechanical properties such as tear strength as compared with nonwoven fabrics made of short fibers.

As mentioned above, the spun-bonded nonwoven fabric C is required to have a basis weight of 30 g/m² or more. If less than 30 g/m², the mechanical properties of the resultant laminated sheet, particularly, the tear strength becomes poor. In view of the mechanical strength of the resultant laminated sheet, the basis weight of the spun-bonded nonwoven fabric C is preferably 35 g/m² or more, more preferably 40 to 100 g/m², and most preferably 40 to 70 g/m².

The thermoplastic resin for the fibers constituting the spun-bonded nonwoven fabric C is not strictly limited as far as the thermoplastic resin is film-forming. Examples of the film-forming thermoplastic resin include polyolefin such as polyethylene and polypropylene; polyester such as poly(ethylene terephthalate), poly(butylene terephthalate) and poly(lactic acid); and polyamide such as nylon 6, nylon 66 and nylon 12.

Preferred thermoplastic resin fibers are polyolefin fibers such as polypropylene single-component fibers, polyethylene single-component fibers, polypropylene-polyethylene conjugated fibers, and polypropylene-polyethylene blended fibers. The spun-bonded nonwoven fabric C made of the polyolefin fibers easily heat-bonds to the heat-bonding nonwoven fabric B to produce a firm bonding with increased strength. Particularly, the spun-bonded nonwoven fabric C made of polypropylene fibers shows more enhanced bonding strength and more improved heat-bonding properties to the heat-bonding nonwoven fabric B and is advantageous in view of production costs.

The average fiber diameter of the fibers for the spun-bonded nonwoven fabric C is preferably 20 µm or more, more preferably 30 to 40 µm, although not strictly limited thereto.

It is preferred that at least one nonwoven fabric selected from the nonwoven fabric A, the heat-bonding nonwoven fabric B and the spun-bonded nonwoven fabric C contains an ultraviolet absorber. More preferably, both the nonwoven fabric A and the spun-bonded nonwoven fabric C contain the ultraviolet absorber. Most preferably, all the nonwoven fabrics A, B and C contain the ultraviolet absorber. The ultraviolet absorber may be contained in respective nonwoven fabrics by internally incorporated into fibers and/or externally adhered to fiber surfaces with the internal incorporation into fibers being preferable. The ultraviolet absorber contained in the nonwoven fabrics constituting the laminated sheet enhances the durability of the house wrap material and the roof underlay sheet. The content thereof in each nonwoven fabric depends on the type of the ultraviolet absorber, and the type and form of the nonwoven fabrics, and preferably 0.5 to 2.0% by mass based on the amount of each nonwoven fabric.

The ultraviolet absorber may be those conventionally used for the polymers which form each nonwoven fabric, and exemplified by, but not limited thereto, a benzophenone ultraviolet absorber such as 2-hydroxy-4-methoxybenzophenone, 2-hydroxy-4-n-octoxybenzophenone, and 4-dodecyloxy-2-hydroxybenzophenone; a benzotriazole ultraviolet absorber such as 2-(2'-hydroxy-3',5'-di-t-butylphenyl)benzotriazole and 2-(2'-hydroxy-3'-t-butyl-5'-methylphenyl)benzotriazole; a salicylic ester ultraviolet absorber such as p-octylphenyl salicylate and dodecyl salicylate; and 2-ethylhexyl-2-cyano-3,3-diphenyl acrylate.

Each nonwoven fabric constituting the laminated sheet of the present invention may further contain, if desired, one or more of a flame retardant, a lubricant, an antistatic agent, an antioxidant, a filler, a dye, a pigment, etc.

The production method of the laminated sheet of the present invention is not strictly limited as far as the nonwoven fabric A and the spun-bonded nonwoven fabric C are firmly face-to-face heat-bonded through the heat-bonding nonwoven fabric B. For example, the laminated sheet may be produced by a calendering method or a press bonding method, with the calendering method being preferred because the laminated sheet is stably and continuously produced in good productivity. The calendering is carried out by a calendering machine comprising a combination of a metal heating roll having a smooth surface such as an iron plain roll and a pair roll such as a paper roll and a rubber roll.

The term "face bonding" referred to herein means the bonding preferably throughout the entire surfaces (100%) of the stacked nonwoven fabrics. However, the term "face bonding" does not exclude the existence of non-bonded portion in an extent which does not adversely affect the beneficial effect of the present invention.

In the production of the laminated sheet of the present invention by the calendering method, the stacked nonwoven fabrics are preferably heated and bonded to form a laminate with the nonwoven fabric A contacting the metal heating roll, because the heat is efficiently conducted from the heating roll surface to the heat-bonding nonwoven fabric B through the nonwoven fabric A, thereby effectively heat-bonding the nonwoven fabric A and the spun-bonded nonwoven fabric C by the heat-bonding nonwoven fabric B. The temperature of the heating roll (surface temperature) depends on type of the polyolefin ultra-fine fibers in the nonwoven fabric A, type of the thermoplastic elastomer ultra-fine fibers in the heat-bonding nonwoven fabric B, etc., and preferably 120 to 150 °C. Although the stacked nonwoven fabrics may be calendered with the spun-bonded nonwoven fabric C contacting the heating roll, a heating roll temperature is required to be higher than in the calendering with the nonwoven fabric A contacting the heating roll, because the conduction of heat from the heating roll to the heat-bonding nonwoven fabric B through the spun-bonded nonwoven fabric C becomes slow owing to the coarse texture of the spun-bonded nonwoven fabric C and the large diameter of the fibers constituting spun-bonded nonwoven fabric C.

The calendering conditions are suitably determined so as to produce a laminated sheet having an intended wind breaking performance, water vapor permeability and waterproof performance. In actual operations, the production is carried out while measuring the air permeability, as an index of the wind breaking performance, according to JIS P 8117, thereby facilitating the process control.

The laminated sheet of the present invention thus produced is suitable as the house wrap material and the roof underlay sheet because of its excellent and well-balanced wind breaking performance, water vapor permeability and waterproof performance.

The present invention will be described in further detail by way of the following examples which should not be construed to limit the scope of the present invention thereto.

### EXAMPLE 1

### Step 1

Polypropylene (MFR = 500 g/10 min) was melt-blown to produced a nonwoven fabric A made of polypropylene ultra-fine fibers (average fiber diameter = 2.3 µm; basis weight = 25 g/m²). In the present invention, MFR (melt flow rate) was measured at 230 °C under a load of 2160 gf.

### Step 2

By melt-blowing a mixture comprising 60 parts by mass of a polystyrene-based thermoplastic elastomer (styrene-ethylene/propylene-styrene block copolymer (SEPS) available from Kuraray Co., Ltd. under the trade mark of "Septon") and 40 parts by mass of polypropylene (MFR = 200 g/10 min), a heat-bonding nonwoven fabric B made of ultra-fine fibers was produced (average fiber diameter = 8.5 µm; basis weight = 10 g/m²).

### Step 3

On a base polypropylene spun-bonded nonwoven fabric C (average fiber diameter = 35.0 µm; basis weight = 40 g/m²), the heat-bonding nonwoven fabric B produced in Step 2 and the nonwoven fabric A produced in Step 1 were stacked in this order to form a three-layered stack. The three-layered stack was calendered by passing it between a mirror-polished iron heating roll kept at 135 °C and a paper roll of a calendering machine with the nonwoven fabric A contacting the heating roll under a linear pressure of 90 kgf/cm at a speed of 15 m/min to produce a laminated sheet. The nonwoven fabrics in the laminated sheet thus produced were firmly face-bonded throughout the entire surface (100% surface). In the peeling test according to JIS L 1085, the laminated sheet caused the structural failure before peeling.

### COMPARATIVE EXAMPLE 1

### Step 1

Polypropylene (MFR = 500 g/10 min) was melt-blown to produced a nonwoven fabric (average fiber diameter = 2.3 µm; basis weight = 35 g/m²).

### Step 2

On the same polypropylene spun-bonded nonwoven fabric C as in Example 1, stacked was the melt-blown nonwoven fabric obtained in Step 1 to form a two-layered stack. The two-layered stack was calendered with the melt-blown nonwoven fabric contacting the heating roll in the same manner as in Example 1 to produce a laminated sheet. Although the laminated sheet was bonded throughout the entire surface (100% surface), easily peeled off in the peeling test according to JIS L 1085 showing a peeling strength of 350 g/5 cm.

### EXAMPLE 2

### Step 1

On a collecting net of a melt-blow machine for producing nonwoven fabric, the same polypropylene spun-bonded nonwoven fabric C as in Example 1 was mounted. Then, a mixture comprising 80 parts by mass of a polystyrene-based thermoplastic elastomer (SEPS available from Kuraray Co., Ltd. under the trade mark of "Septon") and 20 parts by mass of polypropylene (MFR = 200 g/10 min) was melt-blown directly on the spun-bonded nonwoven fabric C while . moving the collecting net together with the spun-bonded nonwoven fabric C, thereby forming a two-layered stack having a heat-bonding nonwoven fabric B (average fiber diameter = 8.5 µm; basis weight = 15 g/m²) on the spun-bonded nonwoven fabric C.

### Step 2

On the heat-bonding nonwoven fabric B of the two-layered stack obtained in Step 1, was stacked the same nonwoven fabric A as in Example 1 to form a three-layered stack, which was then calendered with the nonwoven fabric A contacting the heating roll in the same manner as in Example 1 to produce a laminated sheet. The nonwoven fabrics in the laminated sheet thus produced were firmly face-bonded throughout the entire surface (100% surface). In the peeling test according to JIS L 1085, the laminated sheet caused the structural failure before peeling.

### EXAMPLE 3

A laminated sheet was produced in the same manner as in Example 1 except for using, as the heat-bonding nonwoven fabric B, a melt-blown nonwoven fabric (average fiber diameter = 13 µm; basis weight = 15 g/m²) made of a polyolefin-based thermoplastic elastomer (Engage™ available from Du Pont Dow Elastomer Japan Co., Ltd.). The laminated sheet thus produced was firmly face-bonded throughout the entire surface (100% surface) of the nonwoven fabrics. In the peeling test according to JIS L 1085, the laminated sheet caused the structural failure before peeling.

### EXAMPLE 4

Alaminated sheet was produced in the same manner as in Example 1 except for using, as the nonwoven fabric A, a melt-blown nonwoven fabric made of polypropylene (MFR = 500 g/10 min) and using, as the nonwoven fabric C, a spun-bonded nonwoven fabric (average fiber diameter = 14.3 µm; basis weight = 50 g/m²) made of poly(ethylene terephthalate) having an intrinsic viscosity of 0.68 dL/g when measured at 30 °C in a phenolphenol/tetrachloroethane (1 :1 v/v) mixed solvent. The nonwoven fabrics in the laminated sheet thus produced were firmly face-bonded throughout the entire surface (100% surface). In the peeling test according to JIS L 1085, the laminated sheet caused the structural failure before peeling.

### COMPARATIVE EXAMPLE 2

A laminated sheet was produced in the same manner as in Example 1 except for using, as the nonwoven fabric A, a spun-bonded nonwoven fabric (average fiber diameter = 15 µm; basis weight = 25 g/m²) made of polypropylene (MFR = 500 g/10 min). The nonwoven fabrics in the laminated sheet thus produced were firmly face-bonded throughout the entire surface (100% surface). In the peeling test according to JIS L 1085, the laminated sheet caused the structural failure before peeling.

### COMPARATIVE EXAMPLE 3

A laminated sheet was produced in the same manner as in Example 1 except for using, as the nonwoven fabric B, a melt-blown nonwoven fabric (average fiber diameter = 8.5 µm; basis weight = 20 g/m²) made of a mixture comprising 60 parts by mass of a polystyrene-based thermoplastic elastomer (SEPS available from Kuraray Co., Ltd. under a trade mark of "Septon") and 40 parts by mass of polypropylene (MFR = 200 g/10 min). The nonwoven fabrics in the laminated sheet thus produced were firmly face-bonded throughout the entire surface (100% surface). In the peeling test according to JIS L 1085, the laminated sheet caused the structural failure before peeling.

### COMPARATIVE EXAMPLE 4

### Step 1

A spun-bonded nonwoven fabric A (average fiber diameter = 22 µm; basis weight = 15 g/m²) was produced from polyethylene conjugated fibers having a polyester core and a polyethylene sheath (Eleves™ available from Unitika, Ltd.).

### Step 2

A heat-bonding nonwoven fabric B (average fiber diameter = 8.5 µm; basis weight = 20 g/m²) was produced by melt-blowing a mixture comprising 20 parts by mass of a polystyrene-based thermoplastic elastomer (SEPS available from Kuraray Co., Ltd. under a trade mark of "Septon") and 80 parts by mass of polypropylene (MFR = 200 g/10 min).

### Step 3

On a base polyamide spun-bonded nonwoven fabric C (average fiber diameter = 28 µm; basis weight = 15 g/m²), the heat-bonding nonwoven fabric B produced in Step 2 and the nonwoven fabric Aproduced in Step 1 were stacked in this order to form a three-layered stack, which was then heat-pressed between a heating emboss roll (dotted emboss; embossing area ratio: 25%) and a flat roll at 130 °C under a line pressure of 28 kgf/cm to produce an integrally bonded laminated sheet. The laminated sheet was easily peeled off in the peeling test according to JIS L 1085 showing a peeling strength of 500 g/5 cm.

The hydrostatic strength, the air permeability and the water vapor permeability of the laminated sheets produced in the examples and comparative examples were measured respectively according to JIS L 1092-A, JIS P 8117 and JIS Z 0208. The results are shown in Table 1.

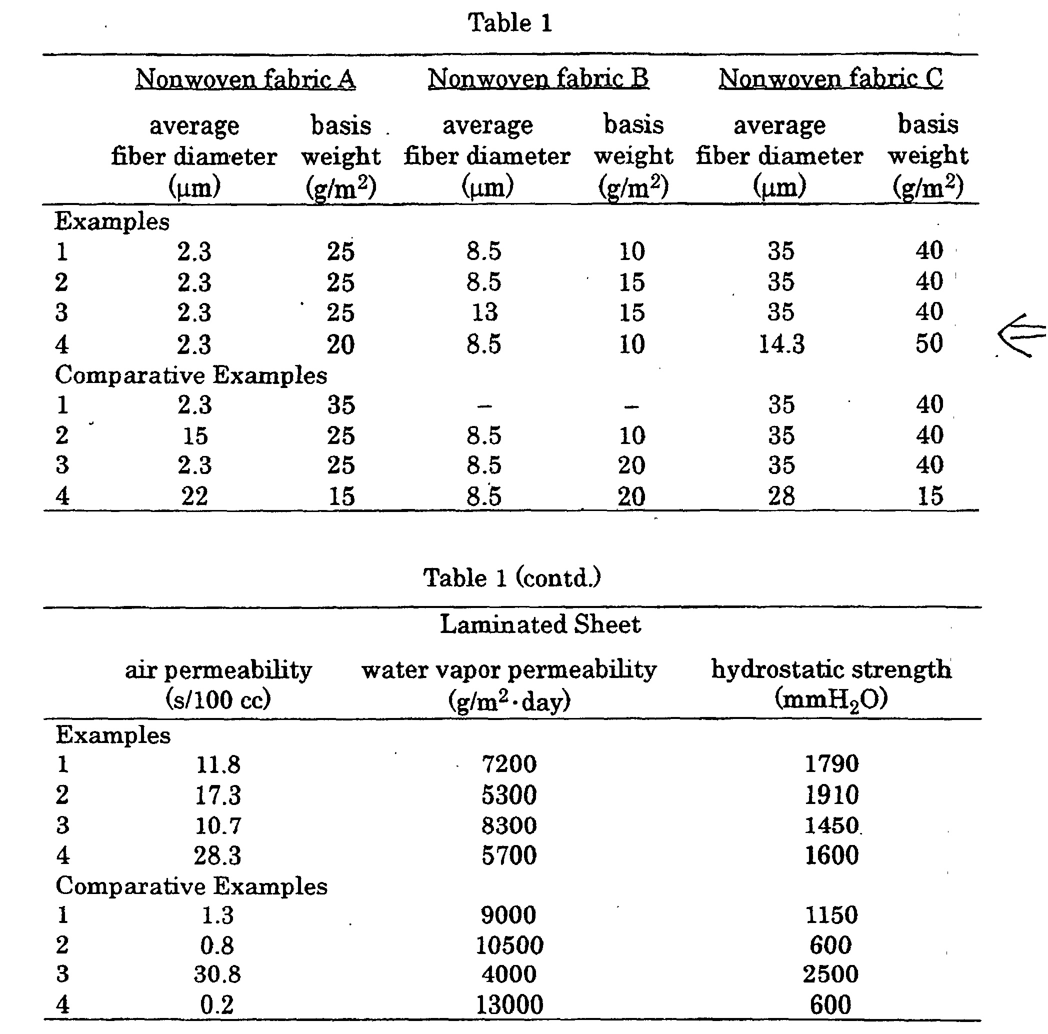

As seen from Table 1, the laminated sheets produced in the examples are excellent and well-balanced in the wind breaking performance, the water vapor permeability and the waterproof performance. In addition, the laminated sheets of the present invention show a high interlaminar bonding and no interlaminar peeling occurred during the peeling test. The laminated sheets produced in the examples have functions and properties sufficiently meeting the Japanese industrial standard "A-6111" for water vapor permeable, waterproof sheets. Therefore, the laminated sheets of the present invention can be suitably used as the house wrap material and the roof underlay sheet.

In contrast, as seen from Table 1, the laminated sheet of Comparative Example 1, in which the melt-blown nonwoven fabric having a basis weight exceeding 30 g/m² was directly heat-bonded to the spun-bonded nonwoven fabric C without using the heat-bonding nonwoven fabric B, is poor in the waterproof performance as shown by the extremely low hydrostatic strength and also poor in the wind breaking performance as shown by the extremely low air permeability as compared with the laminated sheets produced in the examples. In addition, the laminated sheet of Comparative Example 1 is poor in the interlaminar bonding to have a low peeling strength of 350 g/5 cm. The peeling strength can be increased by conducting the calendering of Comparative Example 1 under more severe conditions. However, this in turn significantly reduces the water vapor permeability to 500 cc/cm² • day and makes the laminated sheet into a thin, flat film to injure the appearance and touch thereof.

The laminated sheets of Comparative Examples 2 to 4 also failed to have properties required by the laminated sheet for use as the house wrap material and roof underlay sheet.

As described above, since being excellent and well-balanced in the wind breaking performance, the water vapor permeability and the waterproof performance, the laminated sheet of the present invention fully exhibits its ability as the house wrap material and roof underlay sheet which require a high wind breaking performance, water vapor permeability and waterproof performance. The laminated sheet of the present invention is further excellent in the mechanical properties such as mechanical strength, particularly, has a high interlaminar bonding to cause no interlaminar peeling, and is light in weight and durable for long term.

## Claims

1. A laminated sheet comprising:
(A) a nonwoven fabric having a basis weight of 30 g/m² or less made of polyolefin-based ultra-fine fibers of 5 µm or less in average fiber diameter;
(B) a heat-bonding nonwoven fabric having a basis weight of 15 g/m² or less made of thermoplastic elastomer ultra-fine fibers of 15 µm or less in average fiber diameter; and
(C) a spun-bonded nonwoven fabric having a basis weight of 30 g/m² or more made of thermoplastic polymer fibers, wherein
the nonwoven fabric A and the spun-bonded nonwoven fabric C are face-bonded via the heat-bonding nonwoven fabric B.

2. The laminated sheet according to claim 1, having an air permeability of 10 sec/100 cm³ or more, a water vapor permeability of 4500g/m² • day or more, and a hydrostatic strength of 1050 mmH₂O or more.

3. The laminated sheet according to claim 1 or 2, wherein the nonwoven fabric A is a melt-blown nonwoven fabric made of polyolefin-based ultra-fine fibers.

4. The laminated sheet according to any one of claims 1 to 3, wherein the polyolefin-based ultra-fine fiber is a fiber made of polypropylene, polyethylene or a mixture of polypropylene and polyethylene.

5. The laminated sheet according to any one of claims 1 to 4, wherein the heat-bonding nonwoven fabric B is a melt-blown fabric made of polystyrene-based thermoplastic elastomer ultra-fine fibers, a nonwoven fabric made of ultra-fine fibers of a mixture of a polystyrene-based thermoplastic elastomer and an olefin resin, or a nonwoven fabric made of polyolefin-based thermoplastic elastomer ultra-fine fibers.

6. The laminated sheet according to claim 5, wherein the polystyrene-based thermoplastic elastomer is selected from a styrene-butadiene-styrene block copolymer, a styrene-isoprene-styrene-styrene block copolymer, a styrene-ethylene/butylene-styrene block copolymer, and a styrene-ethylene/propylene-styrene block copolymer.

7. The laminated sheet according to claim 5, wherein the olefin resin is selected from polypropylene, polyethylene and an ethylene-propylene copolymer.

8. The laminated sheet according to any one of claims 1 to 7, wherein the nonwoven fabric C is selected from a polyolefin-based spun-bonded nonwoven fabric, a polyester-based spun-bonded nonwoven fabric and a polyamide-based spun-bonded nonwoven fabric.

9. The laminated sheet according to claim 8, wherein the nonwoven fabric C is a polyolefin-based spun-bonded nonwoven fabric.

10. The laminated sheet according to claim 9, wherein the polyolefin-based spun-bonded nonwoven fabric is a polypropylene single-component fiber, a polyethylene single-component fiber, a polypropylene―polyethylene conjugated fiber, or a polypropylene-polyethylene blended fiber.

11. The laminated sheet according to any one of claims 1 to 10, wherein the average fiber diameter of the thermoplastic polymer fibers constituting the nonwoven fabric C is 20 µm or more.

12. The laminated sheet according to any one of claims 1 to 11, wherein at least one of the nonwoven fabric A, the heat-bonding nonwoven fabric B and the spun-bonded nonwoven fabric C contains an ultraviolet absorber.

13. A house wrap material made of the laminated sheet according to any one of claims 1 to 12.

14. A roof underlay sheet made of the laminated sheet according to any one of claims 1 to 12.

## Patentansprüche

1. Laminiertes Bahnenmaterial, umfassend:
(A) ein Vliesgewebe mit einer flächenbezogenen Masse von 30 g/m² oder weniger, hergestellt aus ultrafeinen Fasern auf Polyolefin-Basis mit einem durchschnittlichen Faserdurchmesser von 5 µm oder weniger;
(B) ein durch Wärme bindendes Vliesgewebe mit einer flächenbezogenen Masse von 15 g/m² oder weniger, hergestellt aus ultrafeinen thermoplastischen Elastomerfasern mit einem durchschnittlichen Faserdurchmesser von 15 µm oder weniger; und
(C) ein Spinnvliesgewebe mit einer flächenbezogenen Masse von 30 g/m² oder mehr, hergestellt aus thermoplastischen Polymerfasern, wobei
das Vliesgewebe A und das Spinnvliesgewebe C über das durch Wärme bindende Vliesgewebe B einen Flächenverbund ergeben.

2. Laminiertes Bahnenmaterial nach Anspruch 1 mit einer Luftdurchlässigkeit von 10 s/100 cm³ oder mehr, einer Wasserdampfdurchlässigkeit von 4500 g/m² · Tag oder mehr, und einer hydrostatischen Festigkeit von 1050 mmH₂O oder mehr.

3. Laminiertes Bahnenmaterial nach Anspruch 1 oder 2, wobei das Vliesgewebe A ein aus ultrafeinen Fasern auf Polyolefin-Basis hergestelltes schmelzgeblasenes Vliesgewebe ist.

4. Laminiertes Bahnenmaterial nach einem der Ansprüche 1 bis 3, wobei die ultrafeine Faser auf Polyolefin-Basis eine aus Polypropylen, Polyethylen oder einem Gemisch von Polypropylen und Polyethylen hergestellte Faser ist.

5. Laminiertes Bahnenmaterial nach einem der Ansprüche 1 bis 4, wobei das durch Wärme bindende Vliesgewebe B ein aus ultrafeinen thermoplastischen Elastomerfasern auf Polystyrol-Basis hergestelltes schmelzgeblasenes Gewebe, ein aus ultrafeinen Fasern eines Gemischs eines thermoplastischen Elastomers auf Polystyrol-Basis und eines Olefinharzes hergestelltes Vliesgewebe, oder ein aus ultrafeinen thermoplastischen Elastomerfasern auf Polyolefin-Basis hergestelltes Vliesgewebe ist.

6. Laminiertes Bahnenmaterial nach Anspruch 5, wobei das thermoplastische Elastomer auf Polystyrol-Basis aus einem Styrol-Butadien-Styrol-Blockcopolymer, einem Styrol-Isopren-Styrol-Blockcopolymer, einem Styrol-Ethylen/Butylen-Styrol-Blockcopolymer und einem Styrol-Ethylen/Propylen-Styrol-Blockcopolymer ausgewählt ist.

7. Laminiertes Bahnenmaterial nach Anspruch 5, wobei das Olefinharz aus Polypropylen, Polyethylen und einem Ethylen-Propylen-Copolymer ausgewählt ist.

8. Laminiertes Bahnenmaterial nach einem der Ansprüche 1 bis 7, wobei das Vliesgewebe C aus einem Spinnvliesgewebe auf Polyolefin-Basis, einem Spinnvliesgewebe auf Polyester-Basis und einem Spinnvliesgewebe auf Polyamid-Basis ausgewählt ist.

9. Laminiertes Bahnenmaterial nach Anspruch 8, wobei das Vliesgewebe C ein Spinnvliesgewebe auf Polyolefin-Basis ist.

10. Laminiertes Bahnenmaterial nach Anspruch 9, wobei das Spinnvliesgewebe auf Polyolefin-Basis eine Polypropylen-Einkomponentenfaser, eine Polyethylen-Einkomponentenfaser, eine konjugierte Polypropylen-Polyethylen-Faser oder eine Polypropylen-Polyethylen-Mischfaser ist.

11. Laminiertes Bahnenmaterial nach einem der Ansprüche 1 bis 10, wobei der durchschnittliche Faserdurchmesser der thermoplastischen Polymerfasern, die das Vliesgewebe C darstellen, 20 µm oder mehr beträgt.

12. Laminiertes Bahnenmaterial nach einem der Ansprüche 1 bis 11, wobei mindestens eines des Vliesgewebes A, des durch Wärme bindenden Vliesgewebes B und des Spinnvliesgewebes C einen UV-Absorber enthält.

13. Isolierungsmaterial für Außenwände, hergestellt aus dem laminierten Bahnenmaterial nach einem der Ansprüche 1 bis 12.

14. Dachunterspannbahn, hergestellt aus dem laminierten Bahnenmaterial nach einem der Ansprüche 1 bis 12.

## Revendications

1. Une feuille stratifiée comprenant :
(A) un tissu non tissé ayant un grammage de 30 g/m² ou moins constitué de fibres ultrafines à base de polyoléfine de 5 µm ou moins de diamètre de fibre moyen ;
(B) un tissu non tissé lié par la chaleur ayant un grammage de 15 g/m² ou moins constitué de fibres ultrafines en élastomère thermoplastique de 15 µm ou moins en diamètre de fibre moyen ; et
(C) un tissu non tissé lié par filage ayant un grammage de 30 g/m² ou plus constitué de fibres en polymère thermoplastique, dans laquelle
le tissu non tissé A et le tissu non tissé C lié par filage sont reliés en vis-à-vis par l'intermédiaire du tissu non tissé lié par la chaleur B.

2. La feuille stratifiée selon la revendication 1, ayant une perméabilité à l'air de 10 s/100 cm³ ou plus, une perméabilité à la vapeur d'eau de 4 500 g/m² • jour ou plus, et une résistance hydrostatique de 1 050 mm H₂O ou plus.

3. La feuille stratifiée selon la revendication 1 ou 2, dans laquelle le tissu non tisse A est un tissu non tissé soufflé à l'état fondu constitué de fibres ultrafines à base de polyoléfine.

4. La feuille stratifiée selon l'une quelconque des revendications 1 à 3, dans laquelle la fibre ultrafine à base de polyoléfine est une fibre constituée de polypropylène, de polyéthylène ou d'un mélange de polypropylène et de polyéthylène.

5. La feuille stratifiée selon l'une quelconque des revendications 1 à 4, dans laquelle le tissu non tissé lié par la chaleur B est un tissu soufflé à l'état fondu constitué de fibres ultrafines en élastomère thermoplastique à base de polystyrène, un tissu non tissé constitué de fibres ultrafines d'un mélange d'un élastomère thermoplastique à base de polystyrène et d'une résine oléfinique, ou un tissu non tissé constitué de fibres ultrafines en élastomère thermoplastique à base de polyoléfine.

6. La feuille stratifiée selon la revendication 5, dans laquelle l'élastomère thermoplastique à base de polystyrène est choisi parmi un copolymère séquencé styrène-butadiène-styrène, un copolymère séquencé styrène-isoprène-styrène, un copolymère séquencé styrène-éthylène/butylène-styrène, et un copolymère séquencé styrène-éthylène/ propylène-styrène.

7. La feuille stratifiée selon la revendication 5, dans laquelle la résine oléfinique est choisie parmi le polypropylène, le polyéthylène et un copolymère éthylène/propylène.

8. La feuille stratifiée selon l'une quelconque des revendications 1 à 7, dans laquelle le tissu non tissé C est choisi parmi un tissu non tissé lié par filage à base de polyoléfine, un tissu non tissé lié par filage à base de polyester et un tissu non tissé lié par filage à base de polyamide.

9. La feuille stratifiée selon la revendication 8, dans laquelle le tissu non tissé C est un tissu non tissé lié par filage à base de polyoléfine.

10. La feuille stratifiée selon la revendication 9, dans laquelle le tissu non tissé lié par filage à base de polyoléfine est une fibre monocomposant de polypropylène, une fibre monocomposant de polyéthylène, une fibre conjuguée polypropylène-polyéthylène et une fibre mélangée polypropylène-polyéthylène.

11. La feuille stratifiée selon l'une quelconque des revendications 1 à 10, dans laquelle le diamètre moyen de la fibre des fibres de polymère thermoplastique constituant le tissu non tissé C est de 20 µm ou plus.

12. La feuille stratifiée selon l'une quelconque des revendications 1 à 11, dans laquelle au moins l'un du tissu non tissé A, du tissu non tissé lié par la chaleur B et du tissu non tissé lié par filage C renferme un absorbant d'ultraviolets.

13. Un matériau pour murs extérieurs de bâtiments constitué d'une feuille stratifiée selon l'une quelconque des revendications 1 à 12.

14. Un matériau de sous-toitures constitue d'une feuille stratifiée selon l'une quelconque des revendications 1 à 12.
